Europäisches Patentamt

(19) European Patent Office

Office européen des brevets

(11) Publication number: **0 266 346 B1**

(12) # EUROPEAN PATENT SPECIFICATION

(45) Date of publication of patent specification:
15.05.91 Bulletin 91/20

(51) Int. Cl.⁵: **A22C 25/17**

(21) Application number: **86903713.5**

(22) Date of filing: **23.06.86**

(86) International application number:
**PCT/SE86/00301**

(87) International publication number:
**WO 87/00007 15.01.87 Gazette 87/01**

(54) **A METHOD FOR REMOVING THE SKIN FROM DOUBLE FILLETS AND A DEVICE FOR PERFORMING THE METHOD.**

(30) Priority: **24.06.85 SE 8503128**

(43) Date of publication of application:
**11.05.88 Bulletin 88/19**

(45) Publication of the grant of the patent:
**15.05.91 Bulletin 91/20**

(84) Designated Contracting States:
**BE DE FR GB IT NL SE**

(56) References cited:
**SE-B- 395 343**

(73) Proprietor: **LINDH, Per Olof**
**Pl. 1084**
**S-430 65 Rävlanda (SE)**
Proprietor: **MARBERG, Christer**
**Pl. 2927**
**S-430 41 Kullavik (SE)**

(72) Inventor: **LINDH, Per Olof**
**Pl. 1084**
**S-430 65 Rävlanda (SE)**
Inventor: **MARBERG, Christer**
**Pl. 2927**
**S-430 41 Kullavik (SE)**

(74) Representative: **Roth, Ernst Adolf Michael et al**
**GÖTEBORGS PATENTBYRA AB Box 5005**
**S-402 21 Göteborg (SE)**

EP 0 266 346 B1

Jouve, 18, rue Saint-Denis, 75001 PARIS

## Description

The present invention refers to a method for removing the skin of double fillets, particularly of fish having thin, frail skin, in that the skin between the fillet sides along the dorsal fin is clamped in a conveyor device with the fillet sides turned inside out, thus that its skin sides are facing each other, and the fillet sides thus turned inside out being moved against deskinning knives, which separate the fillets from the skin.

Skinning fish is a very nuanced problem as fish of different species have different types of skin. The skin may be more or less thin and of different types, e.g. leathery, but also the treatment of the fish, such as subjecting it to marinade, salting, seasoning etcetera, is of big significance for the strength of the skin when it is stripped off the fillet.

From SE-C-202778 and SE-C-395343 are earlier known fish processing machines wherein so called double fillets are freed from the skin interconnecting the fillets. The machine in the older one of these two patent publications is primarily designed for filletting and skinning sprats, whereas that of the later publication also shall be usable for bigger fish. None of these known machines or other such machines, if it comes to that, in practice has been able to become successful on the market, as the fillets either are not freed satisfactorily from the skin or the loss of flesh is too big. An important reason for that ought to be that all hitherto known skinning machines are based on the principle that the flesh shall be cut loose from the skin as close to the skin as possible. As one fish is not like the other it is not possible even with the uttermost precision to guarantee a satisfactory result, which has resulted in very high loss percentage, which can not be accepted in view of the high raw material price. In several cases it can be sufficient that the double fillet is not adequately located on the conveyor device, whereby the dorsal fin will be situated between conveyor device and the circular knives, resulting in that the passage of the skin is prevented and the skin will burst.

It has also been tried to skin fillets after they have been parted, but then remains the problem that the fillets can not be fed automatically into the deskinning machine without requiring a manual and rather exact and therefore time wasting and expensive feeding operation.

## Purpose and most essential features of the invention

The purpose of the present invention is to provide a method and a device for removing also very frail and thin skin, e.g. from herring, whereby the device shall be able with the same advantages to skin raw fish as well as treated fish, i.e fillets that have been treated with marinade or salted, pickled or treated otherwise.

Another purpose is to effect the deskinning on one hand in such a manner that the silvery membrane below the skin is maintained intact as far as possible and on the other hand thus that the aesthetically less attractive black membrane is removed. It furthermore shall be possible to effect the deskinning procedure at such a speed that it without difficulties can be synchronized with conventional degutting and filleting machines. Another important requirement is that the rate of wastage may not exceed one or a few percents. This has been achieved in that the fillet sides are spaced slightly from the conveyor device by means of spacing means situated immediately adjacent the deskinning knives, that the dorsal portion of the double fillet is moved from the spacing means to the inner side of the deskinning knives facing the conveyor device, mainly without direction change, and that the side portions of the fillet sides, at the upper part of the spacing means and at least nearest to the deskinning knives, are subjected to a successively increasing direction change in a direction away from the upper edge of the spacing means, between the rear edge of the spacing means and the bevelled edge of the deskinning knives, thus that the fillets are stripped from the skin, whereby the skin and any dorsal fins freely can pass a space between the deskinning knives and the conveyor device

According to the invention there is also proposed a device for performing the above mentioned method and the most important features thereof are defined in claim 3.

## Description of the drawings

Figure 1 shows in side view the most important parts constituting the deskinning device according to the invention.
Figure 2 is a section along line II-II in figure 1.
Figure 3 shows parts of the deskinning device in section and the conveyor device with the spacing means in a view from above.
Figures 4 and 5 are sections along lines IV-IV and V-V resp. in figure 1.
Figure 6 shows schematically a side view of the entire deskinning device according to the invention.

## Description of the embodiments

The invention hereinafter will be further described as an embodiment with reference to the accompanying drawings.

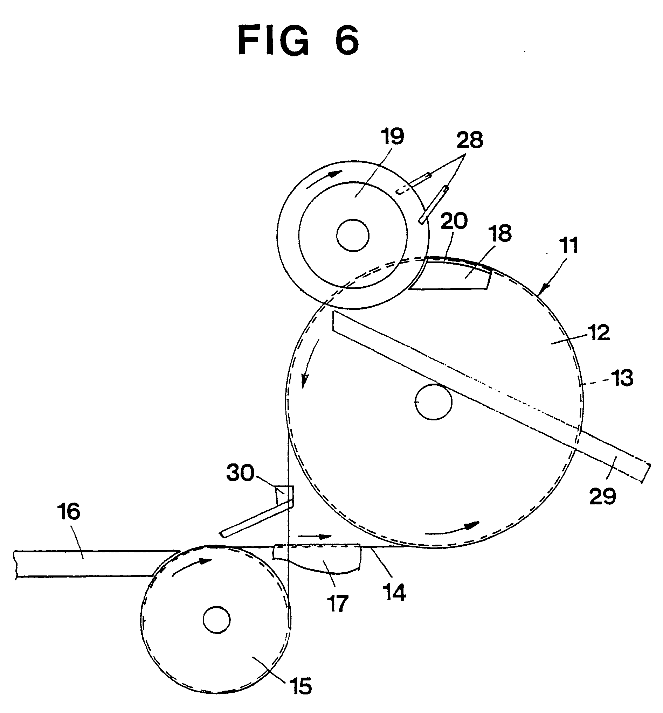

The deskinning device according to the invention is a developement of the skin stripping device described in SE-A 8406159-7. Like this the deskinning device according to the present invention comprises a conveyor device 11, incorporating a carrier plate 12 driven by a not further shown motor and at its circumference being equipped with a groove 13, in which is arranged an endless wire 14 or the like. The wire forms a figure-of-eight and is arranged over a sheeve 15, such as shown in figure 6.

From a transfer mechanism 16, which is only schematically intimated, the so called double fillets 17 are transferred onto the wire thus that the fillets with their dorsal skin will be hanging on the wire and with the flesh sides of the fillets facing each other. During the transport along the circumference of the carrier plate 12 towards its upper part the double fillets will become turned inside out thus that its skin sides will be facing the carrier plate 12.

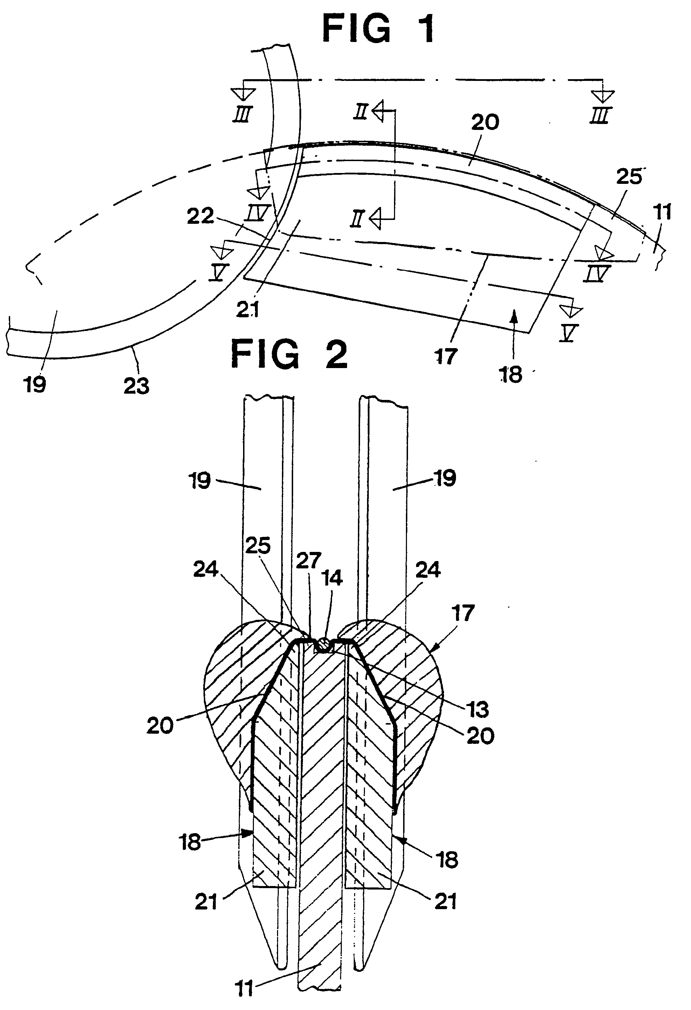

As shown more in detail in figure 1, spacing means 18 are arranged at the upper portion of the carrier plate 12 a both sides of the carrier plate 12 and one circular deskinning knife 19 is arranged behind the spacing means as seen in the transport direction of the carrier plate on each side of the carrier plate, which knives are driven by a not further shown electric motor at a considerably higher speed than the carrier plate 12. The spacing means 18, which are fixed relative to the rotatable carrier plate, are arranged very near the carrier plate 12 and with its upper edge in level with, or lower than the circumference of the carrier plate. The rear end edge of the spacing means, which are facing the deskinning knives are designed with a complementary shape mainly corresponding to the contour of the circular knives, whereas the spacing means in their upper portion is designed with a chamfer 20 facing the outer edge of the carrier plate 12.

The chamfer 20 in the embodiment shown has been given an extension over the entire lenght of the spacing means, which is appropriate when fillets having no sharp changes are guided in towards the deskinning knives 19. The only part of the chamfer 20, which is of vital inmportance to the very skinning operation, is however that situated nearest to the deskinning knives. A portion 21 of constant wall thickness adjoins the chamfer 20 of the spacing means 18, thus that it is obtained a steep change at the rear edge of the spacing means in a direction towards the rounded, blunt edge 23 of the deskinning knives. The circular deskinning knives 19, which compared to earlier known knives of this type has a bigger diameter, are arranged at a distance A from the carrier plate 12, which is so big that also thick skin with appended dorsal fins can pass between them.

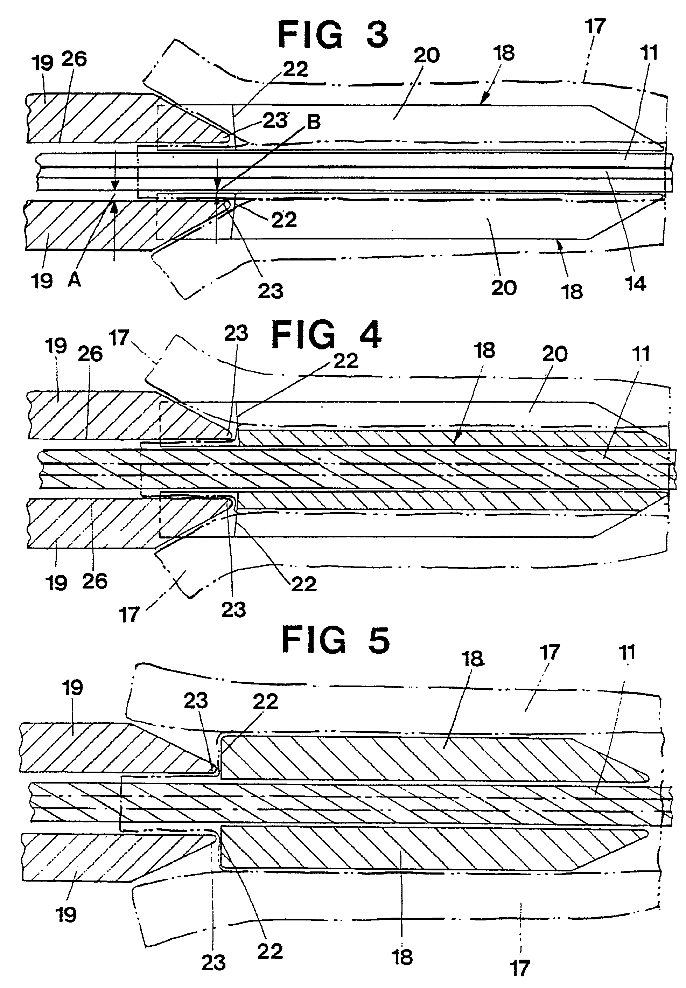

If the deskinning machine according to the invention shall be used for different species of fish and/or fish of varying size it is appropriate that the spacing means 18 and/or the deskinning knives 19 are adjustable laterally relative to the carrier plate 12. The spacing means 18 should also be adjustable longitudinally thus that the slot between its rear edge 22 and the edge 23 of the deskinning knives can be adjusted. As shown in figure 2 of the drawings the chamfer 20 terminates at the upper edge of the spacing means in a slightly rounded point 24, which at one hand lies in level with the circumferential end edge 25 of the carrier plate 12 and on the other hand is situated inside the inner side 26 of the deskinning knives 19, such as shown in figure 3. The distance 8 from the point 25 of the chamfer 20 up to the inner side 26 of the circular knives is chosen in view of the skin thickness of the fish and allows the dorsal portion 27 of the double fillet to pass from the spacing means 18 to the slot A between the inner side 26 of the deskinning knives and the flat side of the carrier plate 12, mainly without direction change. It is thereby ascertained that the skin portions around the dorsal portion of the fish without disturbance can be led past the deskinning knives without any ruptures, even if the dorsal fin or fin bone of the fish should lie wrong and be pulled into this passage.

At conventional deskinning machines it is tried to achieve that the skin is sucked against the carrier plate thus that the fillets will become firmly held when the flesh is cut loose from the skin. According to the present invention there is supplied at both sides of the deskinning knives 19, via nozzles 28, so much water at the same time as the deskinning knives are driven at such a high speed, that a considerable friction reduction is obtained particularly between the deskinning knives and the skin, which friction reduction can be compared to aquaplaning. The skin will be stripped from the fillets, due to the fact that the deskinning knives have no cutting function and the separation of the skin from the fillets is effected in that the skin is subjected to an abrupt direction change over the rear edge 22 of the spacing means 18. This stripping is effected so cautious that the silvery membrane below the skin will remain on the fillets mainly in uninterrupted extension. Some fish, e.g. herring have a black membrane which is unaesthetical and shall be removed, which according to the invention is effected by the distance 8 being adapted to the size of the fish. An increase of the distance B means also an increase of the size of the slice of flesh "cut" away at the passage of the double fillet past the deskinning knives 19.

Function description

A gutted double fillet 17, where head and tail have been cut off and the backbone with attached ventral bones have been cut away and where the fillet sides are interconnected via the dorsal skin of the fish only, is via the transfer device 16 transferred to the movable wire 14 of the deskinning device, such as shown in figure 6. The dorsal portion 27 of the double fillet will be clamped between the wire 14 and the groove 16 of the carrier plate 12, whereby the double fillet is firmly held in longitudinal direction. At the rotation of the carrier plate the double fillet will be conveyed along the circumference of the plate, whereby the double fillet is turned inside out, thus that the skin side of the fillet sides will be facing the flat sides of the carrier plate 12. The fillet sides will be spaced from the carrier plate at the upper portion thereof by means of spacing means 18, for being subjected to an abrupt direction change at the rear edge of the spacing means, said direction change being in the form of a Z-movement against the rounded edge of the deskinning knives, whereby the fillets are slit away from the skin. The fillets are collected in gutters 29 on both sides of the carrier plate, whereas the skin is removed from the wire by aid of an appropriate tool 30.

## Claims

1. A method for removing the skin of double fillets (17), particularly of fish having thin, frail skin, in that the skin along the dorsal fin between the fillet sides is clamped in a conveyor device (11) with the fillet sides turned inside out, thus that its skin sides are facing each other, and the fillet sides thus turned inside out being moved against deskinning knives (19), which separate the fillets from the skin, **characterized therein**, that the fillet sides are spaced slightly from the conveyor device by means of spacing means (18) situated immediately adjacent the deskinning knives (19), that the dorsal portion of the double fillet is led from the spacing means (18) to the inner side (26) of the deskinning knives facing the conveyor device, mainly without direction change, and that the side portions of the fillet sides, at the upper part of the spacing means (18) and at least nearest to the deskinning knives (19), are subjected to a successively increasing deflection movement in a direction from the upper edge of the spacing means (18) in a plane transversely to the direction of movement of the fillets, between the rear edge of the spacing means and the rounded edge (23) of the deskinning knives, thus that the fillets are stripped from the skin, whereby the skin and any dorsal fins freely can pass a space (A) between the deskinning knives and the conveyor device.

2. A method as claimed in claim 1, **characterized therein**, that water is poured over the circular deskinning knives (19), which are driven at such a high speed that a considerable friction reduction – aquaplaning – is obtained between the knives and the skin.

3. A device for performing the method claimed in claim 1, and incorporating a conveyor (11) shaped as a circular carrier plate (12) equipped with means (14) for clamping the double fillets against the circumference of the plate, and circular deskinning knives (19) situated on each side of the carrier plate (12) just opposite each other and in a manner slightly overlapping said carrier plate, **characterized therein**, that in front of each deskinning knife (19), as seen in the transport direction of the carrier plate (12), there is provided a spacing means (18) arranged to space each fillet side resp. from the flat side of the deskinning knife, that the deskinning knives (19) are designed with chamfered, blunt edges (23), that at least a portion (20) of the flat side of the spacing means facing away from the carrier plate and situated nearest to the deskinning knives is bevelled in a direction towards the end edge (25) of the carrier plate, that the spacing means (18) with its rear edge (22) turned towards the deskinning knife (19) is designed with a shape mainly being complementary to the contour of the knife, that the rear edge (22) of the spacing means adjacent its upper bevelled portion (20) is designed with a mainly constant distance to the carrier plate, and that the deskinning knives (19) are arranged at some distance from the carrier plate (12), thus that skin and dorsal fin freely can pass between them.

4. A device as claimed in claim 3, **characterized therein**, that the spacing means and/or the deskinning knives are laterally displaceable relative to the carrier plate and that the spacing means also are adjustable in their longitudinal direction.

## Ansprüche

1. Verfahren zum Enthäuten von Doppelfilets (17), insbesondere von Fisch mit einer dünnen, schwachen Haut, wobei die Haut entlang der Rückenflosse zwischen den Filetseiten in einer Fördereinrichtung (11) eingespannt ist, mit den von innen nach außen gewandten Filetseiten, derart, daß die Hautseiten einander zugewandt sind, wobei die derart von innen nach außen gewandten Filetseiten zu den Enthäutungsmessern (19) verbracht werden, die die Filets von der Haut trennen, dadurch gekennzeichnet, daß die Filetseiten in einen geringen Abstand zu der Fördereinrichtung durch Abstandshalter (18) verbracht werden, die unmittelbar im Bereich der Enthäutungsmesser (19) angeordnet sind, daß der Rückenbereich des Doppelfilets von den Abstandshaltern (18) zur Innenseite (26) der Enthäutungsmesser, die der Fördereinrichtung zugewandt sind, im wesentlichen ohne Richtungsänderung zugeführt werden, und daß die Seitenteile der Filetseiten im oberen Teil der Abstandshalter (18) und wenigstens nahe bei den Enthäutungsmessern (19) einer aufeinanderfolgenden, zunehmenden Umlenkbewegung in Richtung von der Oberkante der Abstandshalter (18) in einer Ebene quer zur Bewegungsrichtung der Filets unterworfen werden, und zwar zwischen der Hinterkante der Abstandshalter und der abgerundeten Kante (23) der Enthäutungsmesser, derart, daß die Filets von der Haut abgestreift werden, wobei die Haut sowie jegliche Rückenflossen einen Zwischenraum (A) zwischen den Enthäutungsmessern und der Fördereinrichtung frei durchlaufen können.

2. Verfahren nach Anspruch 1, dadurch gekennzeichnet, daß Wasser über die Enthäutungsmesser (19) gegossen wird, die bei einer solch hohen Geschwindigkeit angetrieben werden, daß eine wesentliche Reibungsverringerung – Aquaplaning zwischen den Messern und der Haut erzielt wird.

3. Vorrichtung zum Durchführen des Verfahrens gemäß Anspruch 1, mit einem Förderer (11), der als kreisförmige Trägerplatte (12) gestaltet ist, ausgerüstet mit Mitteln (14) zum Erfassen des Dopppelfilets am Umfang der Platte und mit kreisförmigen Enthäutungsmessern (19), die beidseits der Trägerplatte (12) einander gegenäberliegend und die Trägerplatte leicht überlappend angeordnet sind, dadurch gekennzeichnet, daß vor jedem Enthäutungsmesser (19) – in Förderrichtung der Trägerplatte (12) gesehen – ein Abstandshalter (18) vorgesehen ist, der derart angeordnet ist, daß er die jeweilige Filetseite in einen Abstand zur flachen Seite des Enthäutungsmessers verbringt, daß die Enthäutungsmesser (19) mit abgeschrägten, stumpfen kanten (23) ausgerüstet sind, daß wenigstens ein Teil (20) der flachen Seite des Abstandshalters, der der Trägerplatte abgewandt ist und sich sehr nahe bei den Enthäutungsmessern befindet, in einer Richtung gegen die Endkante (25) der Trägerplatte hin angeschrägt ist, daß der Abstandshalter (18) mit seiner den Enthäutungsmessern (19) zugewandten Hinterkante (22) eine Gestalt aufweist, die im wesentlichen komplementär zur kontur des Messers verläuft, daß die Hinterkante (22) des Abstandshalters im Bereich seines oberen, abgeschrägten Teils (20) einen im wesentlichen konstanten Abstand zur Trägerplatte einnimmt, und daß die Enthäutungsmesser (19) in einem gewissen Abstand zur Trägerplatte (12) angeordnet sind, so daß Haut und Rückenflossen zwischen diesen frei hindurchlaufen können.

4. Vorrichtung nach Anspruch 3, dadurch gekennzeichnet, daß die Abstandshalter und/oder die Enthäutungsmesser seitlich relativ zur Trägerplatte verschiebbar sind, und daß die Abstandshalter auch in ihrer Längsrichtung justierbar sind.

**Revendications**

1. Procédé d'enlèvement de la peau de filets doubles (17), en particulier de poissons ayant une peau mince et fragile, dans lequel la peau le long de la nageoire dorsale entre les côtés des filets est pincée dans un dispositif transporteur (11) de sorte que les filets sont rabattus côté intérieur à l'extérieur et que leurs côtés peau sont ainsi en face l'un de l'autre, les filets ainsi retournés côté intérieur à l'extérieur étant déplacés contre des lames de dépouillement (19) qui séparent les filets de la peau, caractérisé en ce que

– les filets sont légèrement espacés du dispositif transporteur par des moyens d'espacement (18) immédiatement adjacents aux lames de dépouillement (19),

– la région dorsale du filet double est guidée des moyens d'espacement (18) à la face intérieure (26) des lames de dépouillement faisant face au dispositif transporteur, sensiblement sans changement de direction, et

– les faces des filets, à la partie supérieure des moyens d'espacement (18) et au moins au voisinage immédiat des lames de dépouillement (19),subissent un mouvement de flexion progressivement croissante à partir du bord supérieur dés moyens d'espacement (18),dans un plan transversal à la direction de mouvement des filets, entre le bord arrière des moyens d'espacement et le bord arrondi (23) des lames de dépouillement, de sorte que les filets sont détachés de la peau, la peau et les nageoires dorsales pouvant passer librement dans un intervalle (A) défini entre les lames de dépouillement et le dispositif transporteur.

2. Procédé suivant la revendication 1, caractérisé en ce que on verse de l'eau sur les lames de dépouillement circulaires (19) qui sont entraînées à une vitesse élevée de sorte qu'on obtient une diminution importante du frottement, ou un aquaplaning, entre les lames et la peau.

3. Dispositif de mise en oeuvre du procédé suivant la revendication 1, comprenant un transporteur (11) sous la forme d'une plaque porteuse circulaire (12) équipée de moyens (14) de blocage des filets doubles contre la périphérie de la plaque, et des lames de dépouillement circulaires (19) situées de chaque côté de la plaque porteuse (12) juste en face l'une de l'autre et de manière à chevaucher légèrement ladite plaque porteuse, caractérisé en ce que

– avant chaque lame de dépouillement (19) dans la direction de transport de la plaque porteuse (12), il est prévu des moyens d'espacement (18) agencés de manière à espacer chaque filet respectivement de la face plane de la lame de dépouillement,

– les lames de dépouillement (19) présentent des bords chanfreinés émoussés (23),

– au moins une région (20) de la face plane des moyens d'espacement, située à l'opposé de la plaque porteuse et la plus proche des lames de dépouillement, est biseautée en direction du bord d'extrémité (25) de la plaque porteuse,

– les moyens d'espacement (18) présentent un bord arrière (22), tourné vers la lame de dépouillement (19), qui est dessiné à une forme sensiblement complémentaire du contour de la lame,

– le bord arrière (22) des moyens d'espacement, adjacent à leur région biseautée supérieure (20), est disposé à une distance sensiblement constante de la plaque porteuse, et

– les lames de dépouillement (19) sont placées à une certaine distance de la plaque porteuse (12), de manière à ce que la peau et la nageoire dorsale puissent passer librement entre les lames et la plaque.

4. Dispositif suivant la revendication 3, caractérisé en ce que

– les moyens d'espacement et/ou les lames de dépouillement sont déplaçables latéralement par rapport à la plaque porteuse, et

– les moyens d'espacement sont également réglables dans leur direction longitudinale.

# FIG 1

20

25

11

22

21

17

18

19    23

# FIG 2

19                    19

25  27
24        14        24

17

20                        13
                          20

18                    18

21                    21

11

# FIG 3

# FIG 4

# FIG 5

# FIG 6